Europäisches Patentamt

European Patent Office

Office européen des brevets

(19)

(11) Numéro de publication: **0 241 329 B1**

(12) **FASCICULE DE BREVET EUROPEEN**

(45) Date de publication du fascicule du brevet:
04.07.90

(51) Int. Cl.⁵: **C01G 25/02**

(21) Numéro de dépôt: **87400537.4**

(22) Date de dépôt: **11.03.87**

(54) Procédé de préparation de zircone stabilisée submicronique à partir de fluosulfate de zirconium et application de la zircone stabilisée obtenue dans des compositions céramiques.

(30) Priorité: **14.03.86 FR 8603654**

(43) Date de publication de la demande:
**14.10.87 Bulletin 87/42**

(45) Mention de la délivrance du brevet:
**04.07.90 Bulletin 90/27**

(84) Etats contractants désignés:
**AT BE CH DE ES FR GB GR IT LI LU NL SE**

(56) Documents cités:
**DE-C- 753 123**
**FR-A- 719 823**
**FR-A- 2 143 781**

(73) Titulaire: **THANN ET MULHOUSE, 95, rue du Général de Gaulle, F-68800 Thann(FR)**

(72) Inventeur: **Guelen, Jean-Claude, 44, avenue du Général Leclerc, F-58500 Clamecy(FR)**
Inventeur: **Colombet, Jean-François, 17, boulevard Richelieu, F-92500 Rueil Malmaison(FR)**
Inventeur: **Magnier, Claude, 3, rue des Chaufourniers, F-75019 Paris(FR)**
Inventeur: **Browaeys, Jean-Philippe, 22, rue de Mazarin, F-75009 Paris(FR)**
Inventeur: **Vesco, Alain, 20, rue Pierre Demours, F-75017 Paris(FR)**

(74) Mandataire: **Dubruc, Philippe et al, RHONE-POULENC INTERSERVICES Service Brevets Chimie 25, quai Paul-Doumer, F-92408 Courbevoie Cédex(FR)**

## Description

La présente invention a pour objet un procédé de préparation de zircone submicronique stabilisée par de l'yttrium ou du cérium, à partir de fluosulfate de zirconium et l'application de la zircone stabilisée obtenue dans des compositions céramiques.

Il est connu (par exemple demande de brevet japonais n°57.191234) de préparer des zircones stabilisées par exemple par de l'yttrium, par neutralisation d'un mélange d'une solution aqueuse d'un sel pur de zirconium (oxychlorure, nitrate...) et d'une solution aqueuse d'un sel d'yttrium (chlorure, nitrate).

La demanderesse à trouvé un procédé permettant de préparer des zircones stabilisées à partir d'un sel de zirconium non hydrosoluble.

Il s'agit selon l'invention d'un procédé de préparation de zircone stabilisée par calcination d'un mélange d'hydroxyde de zirconium et d'hydroxide d'un élément stabilisant choisi parmi l'yttrium ou le cérium, puis broyage et éventuellement tamisage de la zircone stabilisée obtenue, ledit procédé <u>étant caractérisé en ce que</u> le mélange d'hydroxydes de zirconium et d'élément stabilisant est obtenu par :

1) neutralisation par de l'ammoniaque ou un hydroxide alcalin à un pH d'au moins 7 et de préférence d'au moins 10, d'un mélange constitué :
. d'une suspension aqueuse de particules de fluosulfate de zirconium contenant de 5 à 35 % (de préférence 20 à 30 %) en poids de Zr exprimé en Zr $O_2$, le pH de ladite suspension allant de 0 à 3 environ,
. et d'une solution aqueuse d'un sel d'un élément stabilisant contenant de 5 à 20 % (de préférence 10 à 15 %) en poids d'élément stabilisant exprimé sous forme d'oxyde dudit élément, les quantités relatives de suspension aqueuse de fluosulfate de zirconium et de solution aqueuse de sel d'élément stabilisant correspondant à un rapport molaire oxyde d'élément stabilisant / Zr $O_2$ de l'ordre de 1/100 à 20/100.

2) séparation par filtration du mélange d'hydroxydes obtenu puis lavage à un pH voisin de celui de la neutralisation par de l'eau éventuellement additionnée d'ammoniaque ou d'hydroxyde alcalin, suivi d'une refiltration.

3) et éventuellement lavage(s) du mélange d'hydroxydes obtenu à l'étape précédente par remise en suspension dudit mélange d'hydroxydes dans une solution aqueuse d'acide nitrique ou chlorhydrique, le pH de la suspension obtenue devant être supérieur au pH de dissolution de l'hydroxyde de l'élément stabilisant et ne devant pas dépasser 8, suivi(s) d'une filtration.

On entend par "fluosulfate de zirconium" tout hydrate amorphe de formule brute $ZrF_x(SO_4)_y(OH)_z$ où x est compris entre 0,1 et 1, y compris entre 0,1 et 1, z compris entre 1 et 3,7 , x et y ne pouvant être en même temps égaux à 1. On choisit de préférence un fluosulfate de zirconium où x est de l'ordre de 0,5, y de l'ordre de 0,5 et z de l'ordre de 1,5; celui-ci peut être préparé selon le procédé décrit dans le brevet français n°1.375.076 ou dans le brevet US n°3.672.825, par attaque de minerai de silicate de zirconium (zircon) par du carbonate de sodium, puis dissolution du silicozirconate de sodium obtenu dans l'acide chlorhydrique puis addition de sulfate de sodium et d'acide fluohydrique ou de fluosilicate de sodium, hydrolyse à 60°C de la solution obtenue pour précipiter le fluosulfate de zirconium formé et séparation par filtration.

Les particules de fluosulfate de zirconium mises en oeuvre présentent généralement une granulométrie moyenne de l'ordre de 3 à 10μm.

L'étape de neutralisation peut être réalisée favorablement à une temperature de l'ordre de 20 à 100°C, de préférence de l'ordre de 20 à 40°C.

Pour l'obtention de zircones stabilisées de propriétés mécaniques particulièrement intéressantes, on met en oeuvre un rapport molaire $Y_2 O_3$ / Zr $O_2$ de l'ordre de 1/100 à 10/100 (de préférence de l'ordre de 2/100 à 6/100) lorsque l'élément stabilisant est l'yttrium ou un rapport molaire $CeO_2/ZrO_2$ de l'ordre de 5/100 à 20/100 (de préférence de l'ordre de 8/100 à 15/100) lorsque l'élément stabilisant est le cérium.

Parmi les sels d'élément stabilisant pouvant être utilisés on peut citer tout particulièrement le nitrate d'yttrium.

Parmi les bases de neutralisation pouvant être utilisées on peut citer de préférence l'ammoniaque et la soude ; l'étape de neutralisation est réalisée de préférence à un pH d'au moins 10 lorsque la base de neutralisation est l'ammoniaque et à un pH de 13 lorsque la base de neutralisation est la soude.

L'étape subséquente de lavage est réalisée à une temperature de 20 à 100°C (de préférence de l'ordre de 20 à 40°C) ; elle est effectuée au même pH que celui atteint en fin de neutralisation afin d'éliminer les ions sulfates et une partie des ions fluorures désorbés durant la neutralisation.

L'étape éventuelle de lavage à l'acide nitrique ou chlorhydrique a pour but d'éliminer les ions alcalins ou ammonium adsorbés par le mélange d'hydroxydes. Elle peut être réalisée à une temperature de l'ordre de 20 à 100°C, généralement de l'ordre de 20°C.

Elle est effectuée à un pH fonction de la nature de l'élément stabilisant ; ainsi lorsque ce dernier est de l'yttrium un pH de 7 à 8 est préféré ; lorsqu'il s'agit de cérium, le pH peut être compris entre 3 et 8.

Selon un mode particulièrement favorable de réalisation de l'invention, l'étape de neutralisation est effectuée avec de l'ammoniaque à un pH voisin de 10,5 ; l'étape subséquente de lavage est effectuée au même pH avec une solution d'ammoniaque ; après filtration le mélange d'hydroxydes obtenu est lavé à un pH voisin de 7,5 par de l'acide nitrique ou chlorhydrique.

Le mélange d'hydroxydes obtenu après neutralisation, lavage basique et éventuellement lavage à l'aide d'un acide est ensuite calciné après filtration à une temperature de l'ordre de 600 à 1.300°C, de préférence de l'ordre de 900 à1.200°C, la temperature étant fonction du pH de neutralisation; ainsi pour des pH de neutralisation inférieurs ou égaux à 10, une temperature d'au moins 1.150°C est préférée; pour des pH plus élevés, celle-ci peut varier entre 900 et 1100°C.

La durée de cette opération peut varier de 15 mn à 12 h; elle est généralement de l'ordre de 1 h à 6 h.

La poudre de zircone stabilisée ainsi obtenue présente alors une granulométrie moyenne de 3 à 10µm.

Quel que soit l'élément stabilisant, l'analyse radiocristallographique montre que le produit formé est une solution solide.

Elle est ensuite broyée en milieu humide selon des méthodes connues, par exemple dans un broyeur à microbilles (microbilles de 1 mm de diamètre environ) pour obtenir après séchage et tamisage une poudre de granulométrie moyenne de l'ordre de 0,15 à 1 µm celle-ci est constituée de cristallites élémentaires d'une dimension de l'ordre de 20 à 120 mm (200 à 1200 A) et généralement de l'ordre de 30 à 60 mm (300 à 600 A). Sa surface spécifique varie de 50 à 3 m²/g.

Les propriétés données de la poudre stabilisée sont déterminées de la façon suivante :

On mélange la poudre de zircone stabilisée avec un liant en proportion pondérale de l'ordre de 2 %, ce liant étant choisi parmi les liants bien connus dans ce type de technique, tels que l'alcool polyvinylique (RHODOVIOL 4/20 & commercialisé par Rhône-Poulenc).

Mesure de la densité: le mélange est pastillé sous une pression de 1 à 4 t / cm². On procède au frittage, la vitesse de montée en température est de 5°C / mn ; lorsqu'on atteint la température de frittage qui est comprise entre 1.300 et 1.600°C, on reste 3 heures à cette température et on laisse refroidir. On obtient alors une céramique de zircone stabilisée dont la densité atteint au moins 97 % de la densité théorique de la zircone stabilisée considérée.

Mesure de la résistance à la flexion

La pièce cuite est ensuite découpée à l'aide d'une scie diamantée pour obtenir des éprouvettes parallélépipédiques de 40 mm x 3 mm x 4 mm.

Le test de résistance à la flexion 3 points (la distance entre les appuis extrêmes est de 30 mm, la vitesse de déplacement de la presse est de 0,5 mm/mn) est effectué sur une dizaine d'éprouvettes.

Les valeurs obtenues dépendent du type et de la quantité de stabilisant présent.

Ainsi pour une poudre de zircone stabilisée avec 3 % molaire de $Y_2O_3$, la résistance à la flexion est comprise environ entre 600 et 800 MPa.

La poudre de zircone stabilisée selon le procédé de l'invention peut être mise en oeuvre pour préparer des céramiques présentant de bonnes propriétés mécaniques, thermodynamiques et électriques, céramiques utilisables pour la préparation de supports et creusets utilisés à haute température, de sondes à oxygène, de pièces d'usure ou d'adiabatisation des moteurs thermiques, d'outils selon des procédés et dans des formulations bien connues dans ce domaine ...

Les exemples suivants sont données à titre indicatif et ne peuvent être considérés comme une limite du domaine de l'invention.

Exemple 1

On introduit 40 g d'une solution aqueuse de nitrate d'yttrium contenant 13,5 % de poids d'yttrium exprimé sous forme de $Y_2O_3$, dans 530 g d'une suspension aqueuse à pH 2 de fluosulfate de zirconium de formule brute $ZrF_{0,5} (SO_4)_{0,5},(OH)_{1,5}$ ladite suspension contenant 17,8 % en poids de zirconium sous forme de $ZrO_2$.

Le mélange acide obtenu est vigoureusement agité et neutralisé en 15 mn par une solution aqueuse d'ammoniaque 10N jusqu'à atteindre un pH de 10,5.

Le mélange est ensuite filtré puis remis en suspension dans 1000 cm3 de solution aqueuse d'ammoniaque à ph 10,5.

Cette étape de filtration-remise en suspension dans l'ammoniaque à pH 10,5 est répétée plusieurs fois jusqu'à disparition totale des ions sulfates dans les eaux de lavage.

Après désorption des ions sulfates, le gel filtré est remis en suspension dans 1000 cm3 d'eau déminéralisée, puis refiltré et enfin remis en suspension dans 1000 cm3 d'eau à laquelle on ajoute de l'acide nitrique 2N jusqu'à obtenir un pH de 7,5.

La suspension est ensuite filtrée, lavée par 1000 cm3 d'eau déminéralisée puis refiltrée.

On récupère ainsi 250 g d'un mélange humide d'hydroxyde de zirconium et d'hydroxyde d'yttrium, mélange qui est ensuite calciné à 1150°C pendant 5 heures, la montée en température étant de 10°C par minute.

On obtient alors 100 g de poudre de zircone yttriée entièrement cristallisée sous la forme quadratique, caractéristique de la solution solide $ZrO_2$ - 3 % $Y_2O_3$.

Cette poudre est mise en suspension dans de l'eau déminéralisée contenant 0,5 % en poids d'isopropanol ; cette suspension qui contient 600 g/l d'oxyde est broyée dans un broyeur à microbilles jusqu'à obtenir une poudre d'une granulométrie moyenne de 0,5 µm, la surface spécifique étant alors de 8 m²/g.

Cette poudre est mélangée à 2 % en poids d'alcool polyvinylique, soumis à un séchage flash puis compactée sous une pression de 3t/cm2. La densité en cru de la pièce compactée est égale à 54 % de la densité théorique.

Après frittage à 1450°C pendant 3 heures, la densité de la céramique obtenue est de 5,95, c'est-à-dire 97,5 % de la densité théorique.

La résistance à la flexion de ce matériau mesurée sur une dizaine d'éprouvettes comme ci-dessus indiqué sur une dizaine d'éprouvettes est en moyenne de 750 MPa.

Exemple 2

On répète les opérations décrites à l'exemple 1 ; la suele différence consiste à réaliser l'opération de calcination à 1050°C pendant 5 heures au lieu de 1150°C, la poudre obtenue après broyage présentant une granulométrie moyenne de 0,5 µm et une surface spécifique de 12 m²/g.

Caractéristiques du produit :

. densité en cru : 52 % de la densité théorique
. densité après frittage : 97,2 % de la densité théorique
. valeur moyenne de la résistance à la flexion : 720 MPa

Exemple 3

Un mélange acide solution de nitrate d'yttrium-suspension de fluosulfate de zirconium est préparé comme à l'exemple 1 puis est neutralisé par une solution aqueuse d'ammoniaque 10 N jusqu'à atteindre un pH de 10,5.

Le mélange est filtré puis remis en suspension dans 1000 cm3 d'eau déminéralisée.

Cette étape de filtration-remise en suspension dans l'eau est répétée plusieurs fois jusqu'à disparition des ions sulfates dans les eaux de lavage.

On récupère par filtration 250 g d'un mélange humide d'hydroxyde de zirconium et d'hydroxide d'yttrium, mélange qui est ensuite calciné à 1150°C pendant 5 heures.

La poudre obtenue est ensuite broyée (granulométrie moyenne de 0,5 μm, surface spécifique de 7 m²/g), compactée et frittée comme à l'exemple 1.

Caractéristiques du produit :
. densité en cru : 56 % de la densité théorique
. densité après frittage : 97 % de la densité théorique
. valeur moyenne de la résistance à la flexion : 700 MPa

Exemple 4

Un mélange acide solution de nitrate d'yttrium-suspension de fluosulfate de zirconium est préparé comme à l'exemple 1 puis neutralisé par une solution aqueuse de soude 3,5 N jusqu'à atteindre un pH de 13,5.

Après filtration, le précipité est mis en suspension dans 1000 cm3 d'une solution aqueuse de soude à pH 13,5.

Le mélange est filtré puis remis en suspension dans 1000 cm3 d'eau déminéralisée.

Cette étape de filtration-remise en suspension dans l'eau est répétée deux fois.

Après filtration le gâteau est remis en suspension dans 1000 cm3 d'eau à laquelle on ajoute de l'acide nitrique 2N jusqu'à obtenir un pH de 7,5.

Le mélange est filtré puis remis en suspension dans de l'eau à pH 7,5 ; cette opération de filtration-remise en suspension dans l'eau est réalisée jusqu'à désorption totale (<50 ppm en Na₂O) des ions sodium adsorbés pendant la neutralisation.

On obtient après filtration 250 g d'un mélange humide d'hydroxyde de zirconium et d'hydroxyde d'yttrium, mélange qui est ensuite calciné à 1000°C pendant 3 heures.

La poudre obtenue est ensuite broyée (granulométrie moyenne de 0,5 μm, surface spécifique de 14 m²/g), compactée et frittée comme à l'exemple 1.

Caractéristiques du produit :
. densité en cru : 55 % de la densité théorique
. densité après frittage : 97,5 % de la densité théorique

. valeur moyenne de la résistance à la flexion : 650 MPa.

**Revendications**

1. Procédé de préparation de zircone stabilisée par calcintion d'un mélange d'hydroxyde de zirconium et d'hydroxyde d'un élément stabilisant choisi parmi l'yttrium ou le cérium, puis broyage et éventuellement tamisage de la zircone stabilisée obtenue, procédé caractérisé en ce que le mélange d'hydroxydes de zirconium et d'élément stabilisant est obtenu par:

a) neutralisation par de l'ammoniaque ou un hydroxyde alcalin à un pH d'au moins 7 d'un mélange constitué:

d'une suspension aqueuse de particules de fluosulfate de zirconium de formule brute $Zr F_x (SO_4)_y OH_z$ où x est compris entre 0,1 et 1, y compris entre 0,1 et 1, z compris entre 1 et 3, 7, x et y ne pouvant être en même temps égaux à 1, contenant de 5 à 35% en poids de Zr exprimé en $ZrO_2$, le pH de ladite suspension allant de 0 à 3 environ,

et d'une solution aqueuse d'un sel d'un élément stabilisant contenant de 5 à 20% en poids d'élément stabilisant exprimé sous forme d'oxyde dudit élément, les quantités relatives de suspension aqueuse de fluosulfate de zirconium et de solution aqueuse de sel d'élément stabilisant correspondant à un rapport molaire oxyde d'élément stabilisant/$ZrO_2$ de l'ordre de 1/100 à 20/100.

b) séparation par filtration du mélange d'hydroxydes obtenu puis lavage à un pH voisin de celui de la neutralisation par de l'eau éventuellement additionnée d'ammoniaque ou d'hydroxyde alcalin, suivi d'une refiltration.

c) et éventuellement lavage(s) du mélange d'hydroxydes obtenu à l'étape précédente par remise en suspension dudit mélange d'hydroxydes dans une solution aqueuse d'acide nitrique ou chlorhydrique, le pH de la suspension obtenue devant être supérieur au pH de dissolution de l'hydroxyde de l'élément stabilisant et ne devant pas dépasser 8, suivi(s) d'une filtration.

2. Procédé selon la revendication 1 caractérisé en ce qu'à l'étape de neutralisation les particules de fluosulfate de zirconium présentent une granulométrie moyenne de l'ordre de 3 à 10 μm.

3. Procédé selon la revendication 1 ou 2 caractérisé en ce qu'à l'étape a) de neutralisation, le rapport molaire oxyde d'élément stabilisant/Zr O₂ est de 1/100 à 10/100 lorsque l'élément stabilisant est de l'yttrium ou de 5/100 à 20/100 lorsque ledit élément est du cérium.

4. Procédé selon la revendication 3 caractérisé en ce qu'à l'étape de neutralisation le rapport molaire oxyde d'élément stabilisant/Zr O₂ est de 2/100 à 6/100 lorsque ledit élément est de l'yttrium ou de 8/100 à 15/100 lorsque ledit élément est du cérium.

5. Procédé selon l'une quelconque des revendications précédentes caractérisé en ce que l'étape de neutralisation est réalisée à un Ph d'au moins 10 avec de l'ammoniaque ou à un pH de 13 avec de la soude.

6. Procédé selon l'une quelconque des revendications précédentes caractérisé en ce qu'à l'étape de neutralisation la suspension aqueuse de fluosulfate de zirconium contient de 20 à 30 % de Zr exprimé sous forme de Zr O$_2$, et en ce que la solution de sel d'élément stabilisant contient de 10 à 15 % d'élément stabilisant exprimé sous forme d'oxyde dudit élément.

7. Procédé selon l'une quelconque des revendications précédentes caractérisé en ce que l'étape a) de neutralisation, l'opération de lavage de l'étape b) et l'étape éventuelle c) de lavage à l'acide sont réalisées à une température de 20 à 100 °C.

8. Procédé selon l'une quelconque des revendications précédentes caractérisé en ce que l'étape éventuelle c) de lavage à l'acide est effectuée à un pH de 7 à 8 lorsque l'élément stabilisant est de l'yttrium, ou à un pH de 3 à 8 lorsque l'élément stabilisant est du cérium.

9. Procédé selon l'une quelconque des revendications précédentes caractérisé en ce que l'étape a) de neutralisation est effectuée avec de l'ammoniaque à un pH de 10,5, l'opération de lavage de l'étape b) est effectuée au même pH avec une solution d'ammoniaque et l'étape c) de lavage à l'acide est effectuée à un pH de 7,5.

10. Application de la zircone stabilisée obtenue selon la procédé faisant l'objet de l'une quelconque des revendications précédentes à la préparation de céramiques.

## Claims

1. A process for the preparation of stabilized zirconia by calcination of a mixture of zirconium hydroxide and hydroxide of a stabilizing element selected from yttrium or cerium, then crushing and optionally sifting of the stabilized zirconia obtained, the process being characterised in that the mixture of hydroxides of zirconium and stabilizing element is produced by:

a) neutralization by means of ammonia or an alkaline hydroxide to a pH-value of at least 7, of a mixture comprising:

an aqueous suspension of particles of zirconium fluosulphate of the rough formula $Z_rF_x(SO_4)_y$ $OH_z$ in which x is between 0.1 and 1, y is between 0.1 and 1 and z is between 1 and 3.7, and x and y cannot be equal to 1 at the same time, containing from 5 to 35% by weight of Zr expressed as $ZrO_2$, the pH-value of said suspension ranging from 0 to 3 approximately, and

an aqueous solution of a salt of a stabilizing element containing from 5 to 20% by weight of stabilizing element expressed in the form of oxide of said element, the relative amounts of aqueous suspension of zirconium fluosulphate and aqueous solution of stabilizing element salt corresponding to a stabilizing element oxide/$ZrO_2$ molar ratio of the order of 1/100 to 20/100,

b) separation by filtration of the mixture of hydroxides produced, then washing to a pH-value close to that of the neutralization operation, using water optionally with the addition of ammonia or alkaline hydroxide, followed by a re-filtration operation, and

c) optionally one or more washing operations in respect of the mixture of hydroxides obtained in the preceding step by putting said mixture of hydroxides into suspension again in an aqueous solution of nitric or hydrochloric acid, wherein the pH-value of the suspension obtained is to be higher than the pH-value of dissolution of the hydroxide of the stabilizing element and is not to exceed 8, followed by a filtration operation.

2. A process according to claim 1 characterised in that in the neutralization step the particles of zirconium fluosulphate have a mean granulometry of the order of from 3 to 10 μm.

3. A process according to claim 1 or claim 2 characterised in that in neutralization step a), the stabilizing element oxide/$ZrO_2$ molar ratio is from 1/100 to 10/100 when the stabilizing element is yttrium or from 5/100 to 20/100 when said element is cerium.

4. A process according to claim 3 characterised in that in the neutralization step, the stabilizing element oxide/$ZrO_2$ molar ratio is from 2/100 to 6/100 when said element is yttrium or from 8/100 to 15/100 when said element is cerium.

5. A process according to any one of the preceding claims characterised in that the neutralization step is carried out at a pH-value of at least 10 with ammonia or a pH-value of 13 with sodium hydroxide.

6. A process according to any one of the preceding claims characterised in that in the neutralization step, the aqueous suspension of zirconium fluosulphate contains from 20 to 30% of Zr expressed in the from of $ZrO_2$, and that the solution of stabilizing element salt contains from 10 to 15% of stabilizing element expressed in the form of oxide of said element.

7. A process according to any one of the preceding claims characterised in that the neutralization step a), the washing operation of step b) and the optional acid washing step c) are performed at a temperature of from 20 to 100°C.

8. A process according to any one of the preceding claims characterised in that the optional acid washing step c) is carried out at a pH-value of 7 to 8 when the stabilizing element is yttrium, or a pH-value of 3 to 8 when the stabilizing element is cerium.

9. A process according to any one of the preceding claims characterised in that neutralization step a) is carried out using ammonia at a pH-value of 10.5, the washing operation in step b) is carried out at the same pH-value with a solution of ammonia and the acid washing step c) is carried out at a pH-value of 7.5.

10. Use of the stabilized zirconia produced by the process according to any one of the preceding claims, for the preparation of ceramics.

## Patentansprüche

1. Verfahren zur Herstellung von stabilisiertem Zirkoniumdioxid durch Calcinierung eines Gemisches von Zirkoniumhydroxid und einem Hydroxid eines stabilisierenden Elements, ausgewählt aus Yttrium und Cer, anschließendes Zerkleinern und gegebenenfalls Sieben des erhaltenen stabilisierten Zirkoniumoxids, dadurch gekennzeichnet, daß das Gemisch der Hydroxide von Zirkonium und dem stabilisierenden Element erhalten worden ist durch:

a) Neutralisation mit Hilfe von Ammoniak oder einem Alkalihydroxid auf einen pH-Wert von mindestens 7 eines Gemisches, bestehend aus:

– einer wäßrigen Suspension von feinteiligem Zirkoniumfluorsulfat der Summenformel $Z_rF_x(SO_4)_y OH_z$, in der x zwischen 0,1 und 1 liegt, y zwischen 0,1 und 1, z zwischen 1 und 3,7 und x und y nicht gleichzeitig 1 sein können, enthaltend 5 bis 35 Gew.-% Zr, angegeben als $ZrO_2$, wobei der pH-Wert der Suspension bei etwa 0 bis 3 liegt,

– und einer wäßrigen Lösung eines Salzes eines stabilisierenden Elements, enthaltend 5 bis 20 Gew.-% stabilisierendes Element, angegebenen in Form des Oxids dieses Elements, wobei die relativen Mengen der wäßrigen Suspension von Zirkoniumfluorsulfat und der wäßrigen Lösung des Salzes des stabilisierenden Elements einem Molverhältnis von Oxid des stabilisierenden Elements/$ZrO_2$ in der Größenordnung von 1:100 bis 20:100 entsprechen,

b) Abfiltrieren des erhaltenen Gemisches der Hydroxide, dann Waschen bei einem pH-Wert in der Nähe desjenigen der Neutralisation mit Hilfe von Wasser, dem gegebenenfalls Ammoniak oder ein Alkalihydroxid zugesetzt ist, und anschließendes erneutes Filtrieren,

c) und gegebenenfalls (ein oder mehrmaliges) Waschen des in der vorigen Stufe erhaltenen Gemisches der Hydroxide, indem man das erwähnte Gemisch der Hydroxide in einer wäßrigen Lösung von Salpetersäure oder Salzsäure suspendiert, wobei der pH-Wert der erhaltenen Suspension größer sein muß als der pH-Wert der Lösung des Hydroxids des stabilisierenden Elements und 8 nicht überschreiten darf, und anschließendes Filtrieren.

2. Verfahren nach Anspruch 1, dadurch gekennzeichnet, daß in der Neutralisationsstufe die vorhandenen Zirkonfluorsilikatteilchen eine mittlere Teilchengröße in der Größenordnung von 3 bis 10 µm aufweisen.

3. Verfahren nach Anspruch 1 oder 2, dadurch gekennzeichnet, daß in der Stufe a) bei der Neutralisation das Molverhältnis von Oxid des stabilisierenden Elements/$ZrO_2$ 1:100 bis 10:100 beträgt, wenn das stabilisierende Element Yttrium ist, oder 5:100 bis 20:100, wenn das erwähnte Element Cer ist.

4. Verfahren nach Anspruch 3, dadurch gekennzeichnet, daß in der Neutralisationsstufe das Molverhältnis von Oxid des stabilisierenden Elements/$ZrO_2$ 2:100 bis 6:100 ist, wenn das erwähnte Element Yttrium ist, oder 8:100 bis 15:100, wenn das erwähnte Element Cer ist.

5. Verfahren nach einem der vorangehenden Ansprüche, dadurch gekennzeichnet, daß die Neutralisationsstufe bis zu einem pH-Wert von mindestens 10 mit Hilfe von Ammoniak oder bis zu einem pH-Wert von 13 mit Natronlauge durchgeführt wird.

6. Verfahren nach einem der vorangehenden Ansprüche, dadurch gekennzeichnet, daß in der Neutralisationsstufe die wäßrige Suspension von Zirkoniumfluorsulfat 20 bis 30% Zr, angegeben als $ZrO_2$, enthält und daß die Lösung des Salzes des stabilisierenden Elementes 10 bis 15% des stabilisierenden Elementes, angegeben als Oxid dieses Elementes, enthält.

7. Verfahren nach einem der vorangehenden Ansprüche, dadurch gekennzeichnet, daß die Stufe a), die Neutralisation, der Waschvorgang der Stufe b) und die gegebenenfalls durchgeführte Stufe c), das Waschen mit Säure, bei einer Temperatur von 20 bis 100°C durchgeführt werden.

8. Verfahren nach einem der vorangehenden Ansprüche, dadurch gekennzeichnet, daß die gegebenenfalls durchgeführte Stufe c), das Waschen mit Säure, bei einem pH-Wert von 7 bis 8 durchgeführt wird, wenn das stabilisierende Element Yttrium ist, oder bei einem pH-Wert von 3 bis 8, wenn das stabilisierende Element Cer ist.

9. Verfahren nach einem der vorangehenden Ansprüche, dadurch gekennzeichnet, daß die Stufe a), die Neutralisation, mit Hilfe von Ammoniak bis zu einem pH-Wert von 10,5 durchgeführt wird, die Waschstufe b) bei dem gleichen pH-Wert mit einer Ammoniaklösung durchgeführt wird und das Waschen der Stufe c) mit Säure bei einem pH-Wert von 7,5 durchgeführt wird.

10. Anwendung des stabilisierten Zirkoniumdioxids nach dem Verfahren, das Gegenstand eines der vorangehenden Ansprüche ist, zur Herstellung von Keramikwaren.